# EUROPEAN PATENT APPLICATION

(11) **EP 0 766 177 A1**
(43) Date of publication of application: **02.04.1997**
(21) Application number: 96306717.8
(22) Date of filing: 16.09.1996
(51) Int. Cl.: G06F 12/10

(54) **Information handling system including effective address translation for one or more auxiliary processors**

(30) Priority: 29.09.1995 US 537184
(71) Applicant: International Business Machines Corporation, Armonk, N.Y. 10504 (US)
(72) Inventor: Kaiser, John M., Cedar Park, Texas 78613 (US); Maule, Warren E., Cedar Park, Texas 78613 (US); Victor, David W., Round Rock, Texas 78681 (US)
(74) Representative: Burt, Roger James, Dr.

(57) **Abstract**

An information handling system which efficiently processes auxiliary functions such as graphics processing includes one or more processors, a high speed processor bus connecting the one or more processors, a memory controller for controlling memory and for controlling the auxiliary function processing, a memory system, an I/O bus having one or more I/O controllers with I/O devices connected thereto, where the memory controller includes a command buffer for storing a command block, a translation lookaside buffer (TLB), table wal logic, and a page table buffer.

## Description

### TECHNICAL FIELD

The present invention relates to information handling systems and, more particularly, to information handling systems including efficient means for address translation between virtual and real addresses for use by an auxiliary function processor.

### BACKGROUND OF THE INVENTION

Most modern computer systems today use a concept of virtual memory wherein there is more memory available to the application programs than really exists in the machine (so-called real memory). This memory is called virtual because the operating system and hardware let the application think this memory is there, but in reality may not exist in physical memory accessible by the processor(s) but is allocated out on the system hard disk. The hardware and software translate virtual addresses by the program into addresses where the memory really is, either in real physical memory or somewhere out on the hard disk. It does this on a so-called page unit basis which is typically 4K bytes.

These translations are kept in the processor hardware in a translation lookaside buffer (TLB) because they are done constantly and need to be done rapidly. When a page is accessed by a processor and it is not in real memory, a page fault interrupt occurs and the software brings in the page from disk and maps it to a real page in memory. If there was no empty real memory space to put that page in from the disk, the software first selects a page to be copied to the disk freeing up space before replacing it with the page from the disk. This is called page swapping. In order to remove a real page from memory, the software changes the hardware translation buffers (TLBs) so that the old virtual addresses no longer map to their old real page location. This is called invalidating the TLB. If that virtual address is then referenced, the software will take a page fault and then know it is not in real memory and to look for it on the hard disk. When the new page is brought in from the disk, the TLB is then changed to map the new virtual address to that real page address in memory.

Today's computer systems also consist of one or more processors, each having a cache memory which contains a copy of recently used data from real memory to speed up execution. When a processor fetches or stores data to memory, the data is loaded or saved in its cache. A similar technique is used to save data back to memory when not recently used and to update a section of the cache with data currently being accessed by the processor(s). This is usually done entirely in hardware for speed.

When a processor is accessing cached data, it causes no external bus or memory activity and, therefore, is extremely efficient.

In these types of computer systems, several alternatives currently exist for moving data between memory (or a processor cache when data may be modified in a processor cache) and an I/O device. The first alternative is to have the processor issue loads and then stores directly to the devices using PIO (programmed I/O). The processor accesses memory (or cache) using a Load instruction into one of its internal registers. The hardware translates the virtual address using the TLB and gets the data from the real memory (cache) location. As noted above, a page fault will occur if the data is not presently in real memory, and the OS software will swap the data in and then the access will occur. Once the data is in the processor register, it is then written to the I/O device using a store to the I/O location. (The reverse procedure is used if the I/O device is the source of the data and the memory is the target).

This method, although simple in programming terms, has the drawback of consuming any processor cycles since the processor is slowed by the speed of the I/O device, as well as consuming system bus and I/O bus bandwidth since there are no burst transfers available, and the transfers are limited to the processor operand sizes (words, double words, etc.). Transferring a 4K page of data in this manner would require a thousand such operations using the typical word size operand load and stores.

Another common alternative is to use Direct Memory Access (DMA) to transfer flocks of data from memory to I/O or vice versa. This has the advantage over the first alternative of saving many CPU cycles, using more efficient burst transfers and potentially not using the system bus bandwidth, if due to the system organization, the traffic can be kept off of the main system (processor/memory bus); however, there is still a large processor overhead involving the DMA setup, as will be explained below, and in handling the terminating interrupt, which again involves the OS kernel.

The DMA setup is complicated by the fact that when an application wishes to write or read some data from I/O from one of its virtual pages, the I/O DMA devices do not typically understand these virtual addresses and, second, where is the data, in memory or on the hard disk? As noted before, the OS software may have temporarily swapped an application's data page out to disk.

To set up a DMA transfer requires the processor to get the source (or target) memory address, translated from a virtual address to a real memory address, and then get the OS software to "pin" the real page in memory while the transfer is taking place. Both of these operations involve an OS kernel call which can be expensive in processor cycles. The "pinning" operation is for the real page manager to mark the real page unavailable to be paged out to disk and not be replaced by the OS software. If this were allowed, the I/O device could transfer data to an application other than the one requesting the transfer, with disastrous results.

For data intensive transfers such as graphics screen painting or multimedia device transfers, the CPU overhead or system bus bandwidth is the limiting factor.

In the PowerPC™ (PowerPC is a registered trademark of International Business Machines Corporation) processors, there are two external device control instructions which act like a load or store to memory, in that the processor translates a virtual address to a real physical address and places it on the address bus of the processor, and then either loads a register with a word of data from its (system) data bus or stores a word of data from a GPR to the processor (system) data bus. In addition, however, these instructions source a resource identification parameter (RID) along with these operations using additional pins. The PowerPC architecture provides up to a five-bit field for this purpose which could allow up to 32 resources in a system. This RID can be used as an address to select a resource which uses the physical address on the address bus and that data on the data bus for its own unique purposes. These instructions are called external control out word (ecowx) for the store type instruction and external control in word (eciwx) for the load type instruction.

Auxiliary processing functions such as graphics processing have generally been performed by relatively expensive graphics adapters for three dimensional pixel processing in prior art systems.

Recent prior art software developments have allowed graphics processing to be handled by the main processor complex in an information handling system. However, the result was not totally satisfactory since graphics pipeline processing does not adapt well to a normal CPU architecture.

An inherent problem in such systems is that as software in the main processor complex builds command blocks for the auxiliary function processing such as graphics processing, it references effective addresses (the processor's address translation mechanism is not used). When the command block is received by the graphics processor, it contains references to effective, rather than real, addresses. Since the auxiliary function processor is located in a controller such as the memory controller connected between the processor bus and the memory system, means are required to translate the effective addresses to real addresses so that the memory controller, for example, can access the data referenced in the command blocks.

### SUMMARY OF THE INVENTION

Therefore, it is an object of the present invention to execute graphics processing functions in a graphics processor located in a controller attached to the processor bus including means for translating virtual (or effective) addresses contained in command blocks to real addresses so that access is made to real addresses in memory.

Accordingly, an information handling system which efficiently processes auxiliary functions such as graphics processing includes one or more processors, a high speed processor bus connecting the one or more processors, a memory controller for controlling memory and for controlling the auxiliary function processing, a memory system, an I/O bus having one or more I/O controllers with I/O devices connected thereto, where the memory controller includes, a translation lookaside buffer (TLB) for storing recently used address translations, a comparator for comparing addresses associated with a command block to addresses stored in said translation lookaside buffer; and logic means for translating an effective address associated with said command block to a real address for use by said one or more auxiliary function processors.

It is an advantage of the present invention that 3D graphics processing may be efficiently accomplished by an auxiliary function processor in a controller connected to the processor bus, without the overhead of the processor translating the addresses in the command blocks to real addresses, and further calling OS routines to lock down these addresses in real memory so that they cannot be swapped out while they are being processed by the auxiliary function processor.

Other features and advantages of the present invention will become apparent in the following detailed description of the preferred embodiment of the invention taken in conjunction with the accompanying drawing.

### BRIEF DESCRIPTION OF THE DRAWING

Figure 1 is a block diagram of an information handling system in accordance with the present invention.

Figure 2 is a block diagram showing in greater detail a memory controller including an auxiliary function processor and associated logic in accordance with the present invention.

### DETAILED DESCRIPTION OF A PREFERRED EMBODIMENT OF THE INVENTION

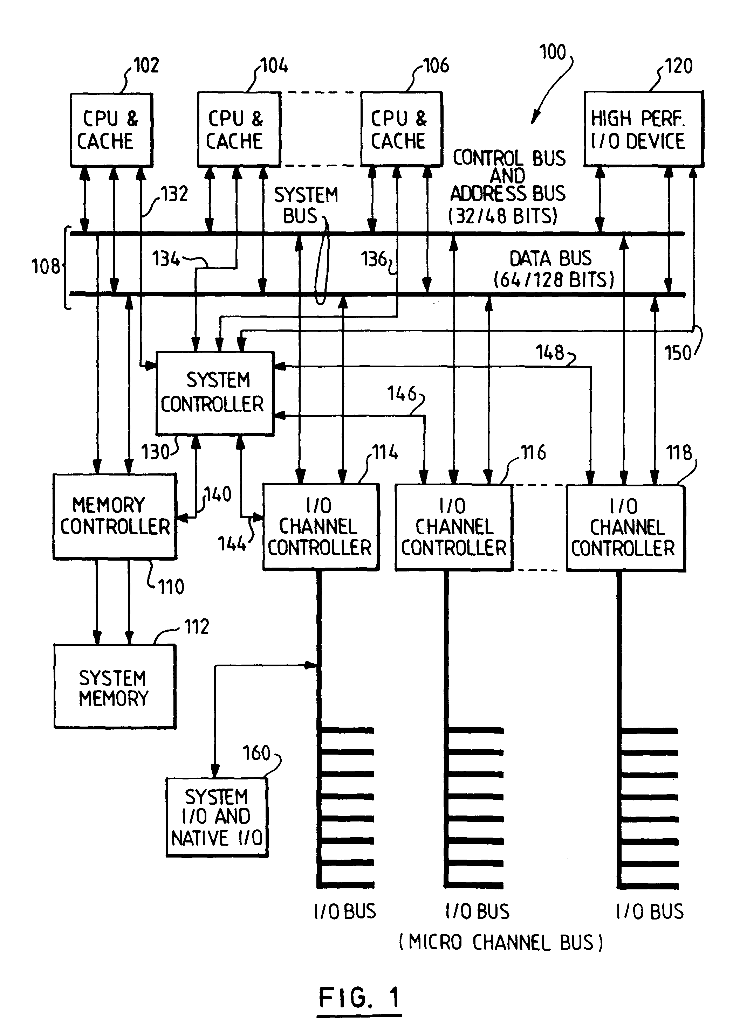

Referring now to Figure 1, an information handling system 100 embodying the present invention will be described. Multiprocessor system 100 includes a number of processing units 102, 104, 106 operatively connected to a system bus 108. Also connected to the system bus 108 is a memory controller 110, which controls access to system memory 112, and I/O channel controllers 114, 116, and 118. Additionally, a high performance I/O device 120 may be connected to the system bus 108. Each of the system elements described 102-120, inclusive, operate under the control of system controller 130 which communicates with each unit connected to the system bus 108 by point to point lines such as 132 to processor 102, 134 to processor 104, 136 to processor 106, 140 to controller 110, 144 to I/O channel controller 114, 146 to I/O channel controller 116, 148 to I/O channel controller 118, and 150 to high performance I/O device 120. Requests and grants of bus access are all controlled by system controller 130.

I/O channel controller 114 controls and is connected to system I/O subsystem and native I/O subsystem 160.

Each processor unit 102, 104, 106 may include a processor and a cache storage device.

One of the bus devices, such as processor 102, may request to enable an operation onto bus 108 from system controller 130 via connection 132. Upon receiving a bus grant from system controller 130, processor 102 will then enable an address onto bus 108.

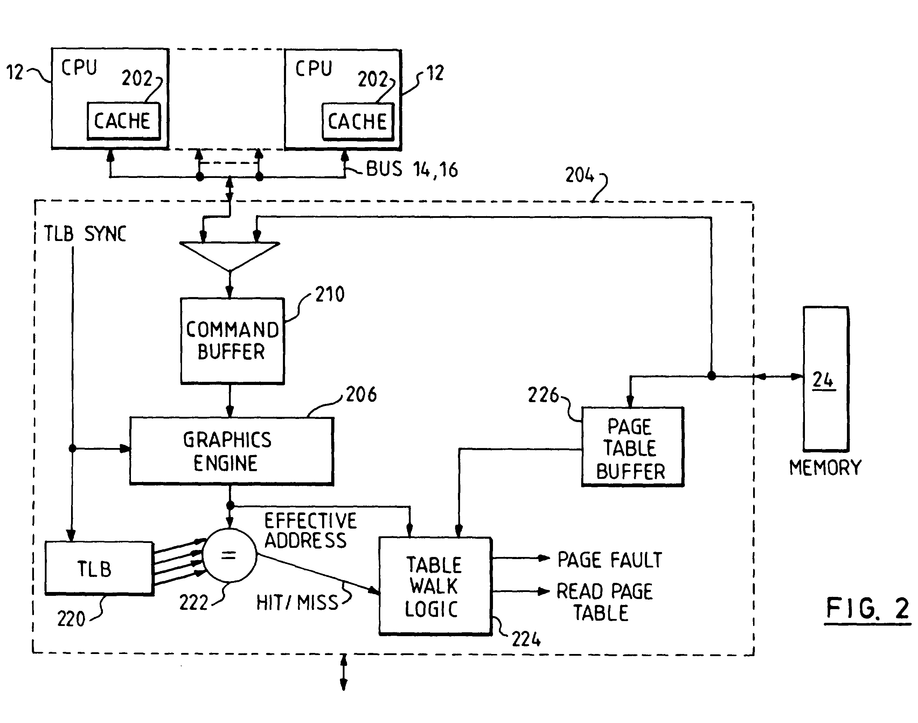

Referring now to Figure 2, elements of the present invention will be described in greater detail.

A memory controller 204 is also connected to processor bus 14, 16 for controlling access to memory system 24 either by processors 12 or by requests from I/O controllers 32. Memory controller 204 includes an auxiliary function processor 206 which may be a graphics processor. Memory controller 204 also includes a command buffer 210 for storing commands for each command block, a translation lookaside buffer 220 as part of the address translation mechanism, compare circuit 222 for determining whether an effective address presented by the graphics processor 206 matches an entry in TLB 220, table walk logic 224 and page table buffer 226.

Address translation, and more particularly address translation in a memory management unit including TLBs, table walk logic and page table buffers, is described in detail in "PowerPC 601 RISC Microprocessor User's Manual" Revision 1, published by Motorola, Inc., 1993, in Chapter 6 "Memory Management Unit", which is hereby incorporated by reference herein.

The operation of an address translation mechanism for translating virtual addresses to real addresses for use in graphics processing in accordance with the present invention will be described.

Address translation logic is included in memory controller 204 to translate effective addresses in command blocks received by memory controller 204 from processor 12 for graphics processing in graphics processor 206. The address translation logic is required, since the graphics processor needs to access a real address in memory where the information to be used in the graphics processing is stored or to be stored.

The address translation logic includes a four-way translation lookaside buffer (TLB) 220. If there is a miss indicated by a no compare from compare circuit 222 between addresses in TLB 220 and the effective address presented by graphics processor 206, memory controller 204 performs a table walk of page tables in memory system 24. The page table walk operation is described in the above-referenced PowerPC User's Manual. Memory controller 204 stores current copies of system architected facilities used to walk the system page tables when doing address translation. Memory controller 204 fetches cache lines from the system page table on an as-needed basis to find an effective to real address translation. If no entry is found in the system page table 226, a page fault condition is sent to the graphics engine 206.

Since memory controller 204 is not a processor, it cannot deal directly with a page fault. If a page fault condition occurs while graphics processor 206 is processing a command block from the main processor complex 12, an error status packet reflecting the page fault condition is passed to the processor 12 by memory controller 204. Processor software recognizes the fault condition and causes the faulting address to be rerun. When processor 12 encounters the same page fault condition, system software (outside the scope of the present invention) resolves the condition and passes control back to the graphics processor 206. An additional mechanism is added to the address translation logic to handle synchronization of reference (R) and change (C) bits in system page table 226. Normally, the R and C bits are updated by processor 12 and used by the software kernel to implement page casting algorithms. The graphics processor 206, however, does not update the R and C bits. This raises the possibility that a situation may arise where a page may be updated by graphics processor 206, but that same page has been invalidated by the software kernel resetting the C bit. To avoid such situations, the address translation logic checks the C bit in entries of page table buffer 226 to verify that the C bit is set for the matching entry in translation table? If the C bit is not set, the page fault mechanism described above is triggered.

Since memory controller 204 contains TLB entries, memory controller must process PowerPC TLB operations. A particular TLB command is initiated when the software kernel is about to invalidate a page. When memory controller 204 detects the TLB command on the processor bus 14, 16, the translation logic flushes the TLB 220, and any transaction utilizing a previously translated address is forced to complete any transaction utilizing that address before the TLB invalidate command can complete.

Although the invention has been described with respect to a preferred embodiment which specifically deals with graphics processing where the graphics processing engine is embodied as a portion of a memory controller, it will be understood by those skilled in the art that the invention equally applies to other auxiliary function processors which require access to processors across the processor bus and to memory in a manner so as to minimize interference with other processor and memory accesses.

Accordingly, the scope of this invention is limited only by the following claims and their equivalents.

## Claims

1. An information handling system, comprising:
one or more processors;
a processor bus connecting the one or more processors;
a memory controller for controlling memory and for controlling one or more auxiliary function processors;
a memory system; and
an I/O bus having one or more I/O controllers with I/O devices connected thereto;
said memory controller comprising:
a translation lookaside buffer for storing recently used address translations;
a comparator for comparing addresses associated with a command block to addresses stored in said translation lookaside buffer; and
logic means for translating an effective address associated with said command block to a real address for use by said one or more auxiliary function processors.

2. An information handling system, according to claim 1, further comprising:
means for signalling a page fault condition to a processor.

3. An information handling system, according to claim 1, further comprising:
means for testing one or more predetermined bit positions in an entry in a page table to determine if a page in memory is being changed by other elements of said information handling system.

4. An information handling system, according to claim 3, further comprising:
means for triggering a page fault if said one or more predetermined bit positions in said entry are not active.

5. An information handling system, according to claim 4, further comprising:
means responsive to a predetermined processor command for inhibiting execution of said command in said memory controller until a current transaction is completed.

6. A memory controller in an information handling system, comprising:
a translation lookaside buffer for storing recently used address translations;
a comparator for comparing addresses associated with a command block to addresses stored in said translation lookaside buffer; and
logic means for translating an effective address associated with said command block to a real address for use by said one or more auxiliary function processors.

7. A memory controller according to claim 6, further comprising:
means for signalling a page fault condition to a processor.

8. A memory controller according to claim 6, further comprising:
means for testing one or more predetermined bit positions in an entry in a page table to determine if a page in memory is being changed by other elements of said information handling system.

9. A memory controller according to claim 8, further comprising:
means for triggering a page fault if said one or more predetermined bit positions in said entry are not active.

10. A memory controller according to claim 9, further comprising:
means responsive to a predetermined processor command for inhibiting execution of said command in said memory controller until a current transaction is completed.
